# EUROPÄISCHE PATENTSCHRIFT

(11) **EP 2 898 032 B1**
(45) Veröffentlichungstag und Bekanntmachung des Hinweises auf die Patenterteilung: **18.10.2017**
(21) Anmeldenummer: 13774370.4
(22) Anmeldetag: 20.09.2013
(51) Int. Cl.: C09J 7/00, E04D 12/00

(54) **DICHTUNGSBAND**
SEALING TAPE
BANDE D'ÉTANCHÉITÉ

(30) Priorität: 21.09.2012 DE 102012108926
(43) Veröffentlichungstag der Anmeldung: 29.07.2015
(73) Patentinhaber: Biologische Insel Lothar Moll GmbH & Co. KG, 68723 Schwetzingen (DE)
(72) Erfinder: MOLL, Lothar, 68723 Schwetzingen (DE)
(74) Vertreter: Thews, Karl
(86) Internationale Anmeldenummer: PCT/EP2013/069612
(87) Internationale Veröffentlichungsnummer: WO 2014/044815

(56) Entgegenhaltungen:
- EP-A2- 1 881 047
- EP-A2- 2 272 933
- DE-A1-102007 060 533
- DE-A1-102008 063 723

## Beschreibung

Die Erfindung bezieht sich auf ein Dichtungsband für den Baubereich zum dichten Anschließen und Verbinden von Bauelementen. Das Dichtungsband ist aus einer Kleberaupe einer elastischen und selbstklebenden homogenen Masse gebildet. Die Kleberaupe ist ohne ein die Masse bindendes Trägermaterial derart formstabil und standfest, dass sie selbsttragend ist. Bei Raum- oder Umgebungstemperaturen zwischen 0°C und 40°C entfaltet die Kleberaupe auf unpolaren, faserigen und feuchten Substratoberflächen ihre klebende und selbstschweißende Eigenschaft.

Selbsttragenden Dichtungsbänder sind bereits im Stand der Technik zum Anschließen von Dampfbremsen und Dampfsperren bekannt. Ein silikonisiertes Papier als Schutzschicht ist keine Trägerschicht im Sinne der Erfindung. Eine Trägerschicht ist fest mit dem Klebstoff verbunden.

Nach der DE 10 2008 054 031 A1 ist ein Verfahren zur Herstellung eines Klebebandes für den Baubereich größerer Schichtdicke beschrieben, welches auf einem wässrigen Polymersystem basiert und vorzugsweise eine Schichtdicke von mehr als 0,5 mm hat. Bei dem Verfahren wird in einem ersten Beschichtungsschritt eine wässrige Polymerdispersion auf ein als Trägermaterial bezeichnetes silikonisiertes Papier aufgebracht und getrocknet. Darauf wird in einem zweiten Beschichtungsschritt die gleiche oder eine andere wässrige Polymerdispersion aufgebracht und getrocknet. Unter Erhalt eines ersten Mehrschichtverbundes, wird ein zweiter Mehrschichtverbund in gleicher Weise hergestellt, und der erste Mehrschichtverbund und der zweite Mehrschichtverbund werden durch Kaschieren miteinander verbunden. Dieses Klebeband weist keine klassische Trägerschicht auf, die mit der Klebemasse fest verbunden ist und die die Klebemasse trägt. Dieses Herstellungsverfahren für eine mehrteilige und damit nicht homogene Kleberaupe ist aufwendig.

Ferner ist unter der Bezeichnung "Gerband 670" der Firma Gerlinger GmbH & Co. KG ein Dichtklebeband mit einer Kleberaupe bekannt. Die Kleberaupe ist aus einem Strang Butylkautschuk und einer auf das Butylkautschuk aufkaschierten Klebeschicht aus einem Polyacrylat mit einem Gittergelege gebildet. Aufgrund der vergleichsweise schwachen Klebeeigenschaften von Butylkautschuk im Vergleich zu Polyacrylaten auf unpolaren oder feuchten Substratoberflächen dient die Klebeschicht aus einem Polyacrylat als Haftschicht für die zu verklebenden Substrate.

Butylkautschuk zeichnet sich als Dichtmittel zwar durch gute Dämpfungseigenschaften aus und weist ein auch bei sehr tiefen Temperaturen elastisches Verhalten auf. Nachteilig zu vermerken sind seine geringen Widerstandswerte für Wasserdampfdiffusion und seine schwachen Klebeeigenschaften auf unpolaren oder feuchten Substraten.

Die wasserdampfdiffusionsäquivalente Luftschichtdicke sd mit der Einheit Meter [m] ist ein in der Bauphysik gebräuchliches Maß für den Widerstand, den eine Bauteilschicht der Wasserdampfdiffusion entgegensetzt. Sie beschreibt den Diffusionswiderstand anschaulich, indem sie die Dicke angibt, welche eine ruhende Luftschicht haben muss, damit sie im stationären Zustand und unter denselben Randbedingungen von demselben Diffusionsstrom durchflossen wird wie die betrachtete Bauteilschicht. Sie wird auch als sd-Wert bezeichnet. Je höher der Wert, desto weniger Feuchtigkeit diffundiert durch das Material und umgekehrt.

Der sd-Wert berechnet sich aus dem Produkt der Wasserdiffusionswiderstandszahl beziehungsweise dem µ-Wert und der Schichtdicke (S) des Materials in Meter. Der µ-Wert ist eine dimensionslose Größe, die für jedes Baumaterial in genormten Testgeräten bestimmt werden kann. Während die Wasserdampfdiffusionswiderstandszahl µ die Diffusionseigenschaften eines Materials beschreibt, gibt der sd-Wert als temperaturunabhängige Eigenschaft des Materials die Diffusionseigenschaften eines konkreten Bauteils mit gegebener Dicke wieder.

Bei einem sd-Wert kleiner 0,5 spricht der Fachmann von diffusionsoffen, bei einem sd-Wert zwischen 0,5 und 1500 von diffusionshemmend und darüber von diffusionsdicht.

Bauteile mit einem sd-Wert größer als 10 m werden als Dampfbremsen bezeichnet, Bauteile mit einem sd-Wert größer als 100 m werden als Dampfsperren bezeichnet.

Der µ-Wert von wässrigen Polymersystemen auf Basis von Acrylaten liegt bei maximal 3.500. Der µ-Wert von Butylkautschuk liegt maximal bei 150.000.

Der Erfindung liegt die Aufgabe zugrunde, ein selbsttragendes Dichtungsband derart auszubilden und anzuordnen, dass es einfach herstellbar ist, sehr gute Klebeeigenschaften auf unpolaren, faserigen oder feuchten Substraten aufweist und gleichzeitig eine diffusionsdichte Verklebung ermöglicht.

Gelöst wird die Aufgabe erfindungsgemäß dadurch, dass einerseits die beiden Parameter für den sd-Wert aufeinander abgestimmt werden, die nach der Verbindung von zwei Bauelementen durch die Kleberaupe für den sd-Wert grundlegend sind, nämlich der µ-Wert der Masse und die relevante Schichtdicke der Kleberaupe und andererseits eine Masse verwendet wird, die auf unpolaren, faserigen und/oder feuchten Substraten sehr gut klebt und bei der sich ohne nachteilige Klebeeigenschaften hohe µ-Werte einstellen lassen.
Gegenständlich lässt sich diese Lösung durch die Merkmale des unabhängigen Anspruchs 1 darstellen.
Nach Anspruch 1 sind die Schichtdicke oder die von der Schichtdicke abhängige Querschnittfläche und der µ-Wert derart abgestimmt, dass ein sd-Wert von mindestens 1500 m erreicht werden kann.

Es wurde in Bezug auf die im Anspruch definierte Masse aus der Familie der Heißkleber überraschend gefunden, dass sich dann ungewöhnlich hohe µ-Werte einstellen lassen, wenn die Polyolefine in Gegenwart von Metallocen als Katalysator hergestellt wurden. Polyethylen als ein Stoff aus der Gruppe der Polyolefine beispielsweise hat üblich einen µ-Wert von 100.000. Durch den Einsatz von Metallocen als Katalysator kann bei Polyethylen ein bis zu 50-fach größerer µ-Wert erreicht werden. Obwohl der Anteil der Polyolefine in der Masse als Mischung wesentlich kleiner als 50 Gew.-% ist, wird so auch bei der Masse ein hoher µ-Wert in der Größenordnung von 10⁶ erreicht.

Heißkleber werden üblicherweise, wie der Name schon sagt heiß und damit in flüssiger Form, mit einer Temperatur oberhalb des Schmelzpunktes verarbeitet. Der Schmelzpunkt von Heißkleber liegt im Bereich zwischen 180 und 200 °C.

Ein werkseitiger flüssiger Auftrag von Heißkleber zum Abdichten und Anschließen von Baumaterial ist bei der Herstellung von selbstklebenden Baumaterialien beispielsweise nach der DE 10 2007 037 754 A1 bekannt. Hierbei werden beispielsweise Dampfbremsen radseitig mit einer Klebeschicht versehen, damit die Dampfbremsen ähnlich wie Klebeband auf der Baustelle verklebt werden können. Die Schichtdicke von werkseitig appliziertem Heißkleber auf solche Bahnen beträgt zwischen 0,3 mm und 0,5 mm. Ein Klebstoffauftrag mit größerer Schichtdicke ist für eine randseitige Konfektionierung nachteilig, weil Bahnen mit mehr als 10 m Länge nicht mehr parallel gewickelt werden können.

Andererseits ist es in einem solchen Temperaturbereich äußerst aufwendig und gefährlich, den Klebstoffauftrag auf der Baustelle beim Verlegen durchzuführen.

Ohne die äußerst positiven Klebeeigenschaften von Heißklebern, insbesondere ihre sehr guten Wechselwirkungen mit unpolaren, faserigen und/oder feuchten Werkstoffen aufgeben zu müssen, ist es zur Lösung der Aufgabe vorgesehen, den Heißkleber bei Umgebungstemperatur vergleichsweise kalt in Form einer als Rolle konfektionierten Kleberaupe aufzutragen.

Bei der Herstellung weist die Kleberaupe annähernd Schmelztemperatur auf. Damit die Kleberaupe die für das kalte Verkleben notwendigen elastischen und selbstschweißenden Eigenschaften sowie hohe µ-Werte bei entsprechender Schichtdicke aufweist, beinhaltet die Masse als Mischung beispielsweise die folgenden Anteile:
15-25 Gew.-% Polyolefine, die in Gegenwart von Metallocen als Katalysator hergestellt wurden
40-60 Gew.-% Kohlenwasserstoffharze
25-35 Gew.-% Polyisobutylen (Polyisobuten, PIB)

Ziel der Erfindung ist es zu erreichen, dass die Kleberaupe eine Breite oder eine Querschnittfläche aufweist, die so groß ist, dass nach dem Verkleben der Baustoffe eine verbleibende Restbreite der Kleberaupe gegeben ist, welche multipliziert mit dem µ-Wert der Masse einen sd-Wert von mindestens 1500 m erreicht.

Ferner kann es vorteilhaft sein, wenn die Kleberaupe aus einem einteiligen, materialidentischen und homogenen Strang der Masse hergestellt ist. Die Kleberaupe wird komplett als ein einziger Strang fortlaufend hergestellt. Ein weiterer Arbeitsschritt zur Vergrößerung der Querschnittfläche ist nicht notwendig. Einteilig bedeutet nicht aus mehreren Teilen zusammen gesetzt, unabhängig davon, ob die mehreren Teile miteinander verbunden sind oder nicht. Materialidentisch bedeutet, dass auch keine Verbundstoffe mit unterschiedlichen Materialien verwendet werden, die an einem Stück hergestellt werden. Eine homogene Masse hat makroskopisch überall das gleiche Gefüge, auch wenn mikroskopisch chemisch betrachtet verschiedene Molekülverbände nebeneinander angeordnet sind.

Vorteilhaft kann es auch sein, wenn die Kleberaupe eine runden und/oder rechteckförmige Querschnittfläche mit einem Verhältnis von Breite zu Schichtdicke von höchstens 10 aufweist, bevorzugt zwischen 2 und 5 aufweist. Eine relativ breite Kleberraupe hat den Vorteil, dass entsprechend der sd-Wert in Richtung der Breite größer wird. Eine relativ schmale Kleberaupe hat den Vorteil, dass sie mit wesentlich kleineren Bögen verlegt werden kann und einfacher auf einer Spule über Kreuz gewickelt werden kann.

Grundsätzlich ist es vorteilhaft, wenn die Kleberaupe in einer Richtung rechtwinklig zu ihrer Längsachse eine plastische Streckgrenze von mindestens 400 % aufweist. Dadurch wird erreicht, dass die beiden mit der Kleberaupe verbundenen Bauelemente sich relativ zueinander um ein Maß bewegen, das mehrere Zentimeter beträgt, ohne dass die grundsätzliche Verbindung gelöst wird. Ein Anspruch auf Dichtheit und einen sd-Wert von mindestens 1500 besteht dabei nicht.

Von besonderer Bedeutung kann für die vorliegende Erfindung sein, wenn die Kleberaupe in einer Richtung rechtwinklig zu ihrer Längsachse eine elastische Streckgrenze von mindestens 25 % aufweist. Hierdurch können sich die Bauelemente mehrere Millimeter zueinander bewegen, ohne dass die Kleberaupe in ihrem Gefüge wesentlich verändert wird.

Die plastische und die elastische Streckgrenze beziehen sich im Wesentlichen auf die Breite und die Schichtdicke.

In Zusammenhang mit der erfindungsgemäßen Ausbildung und Anordnung kann es von Vorteil sein, wenn die Kleberaupe mit einer Länge von mindestens 10 Metern auf eine Trennlage appliziert ist und gemeinsam mit der Trennlage zu einer Rolle oder zu einer Kreuzspule aufgewickelt ist. Das Aufwickeln auf eine Kreuzspule entweder nur neben- und übereinander oder ähnlich wie es für Fäden zum Weben oder Nähen bekannt ist über Kreuz hat den Vorteil, dass der Durchmesser der Spule kleiner ist, als der einer Rolle, auf der das Dichtungsband gleicher Länge nur in einer Ebene übereinander aufgewickelt ist.

Für eine Konfektionierung auf einer Kreuzspule ist ein relativ schmales Dichtungsband vorteilhaft.

Als Trennlage wird bevorzugt ein silikonisiertes Band aus einer Kunststofffolie oder Papier eingesetzt.

Ein wesentlicher Vorteil ist es, wenn die Kleberaupe trägerfrei ist. Die formstabile Kleberaupe ist nicht an ein Trägermaterial gebunden, mit dem die Kleberaupe verarbeitet wird. Anders als bei einem Klebeband, bei dem das Band als Träger den Klebstoff trägt, trägt sich die Kleberaupe selbst. Auch Armierungsgelege oder ähnliche als Träger zu bezeichnende Hilfsmittel sind bei einer trägerlosen Kleberaupe nicht vorhanden.

Vorteilhaft kann ferner ein Spender sein, der zum Abwickeln einer Rolle oder einer Kreuzspule dient und eine drehbare Aufnahme für die Rolle oder Kreuzspule, eine Führungsschiene für das schon abgewickelte Dichtungsband sowie eine Schneide zum Durchtrennen des Dichtungsbandes aufweist. Ein solcher Spender funktioniert ähnlich wie der aus dem Stand der Technik bekannte Spender für Klebebandrollen zum Schließen von Kartonage.

Verwendung von Klebestoffen aus der Familie der Heißklebstoffe in Form einer trägerlosen, selbsttragenden Kleberaupe zum dichten Verkleben von Baustoffen bei einer Verarbeitungstemperatur zwischen 0 °C und 40 °C, wobei die Klebstoffe als Mischung zumindest Polyolefine enthalten, die in Gegenwart von Metallocen als Katalysator hergestellt wurden.

Weitere Vorteile und Einzelheiten der Erfindung sind in den Patentansprüchen und in der Beschreibung erläutert und in den Figuren dargestellt. Es zeigt:
- Figur 1: eine rechteckförmige Querschnittsform mit einer Querschnittfläche A;
- Figur 2: eine ovale Querschnittsform mit einer Querschnittfläche A;
- Figur 3: eine Draufsicht auf eine Kleberaupe mit einer Längsachse X;
- Figur 4a: eine schematische Seitenansicht von zwei noch nicht miteinander über eine Kleberaupe dicht verbundenen Bauelementen;
- Figur 4b: eine schematische Seitenansicht der beiden miteinander über die Kleberaupe dicht verbundenen Bauelemente;
- Figur 5: eine schematische Draufsicht von zwei miteinander über eine Kleberaupe dicht verbundenen Bauelementen.

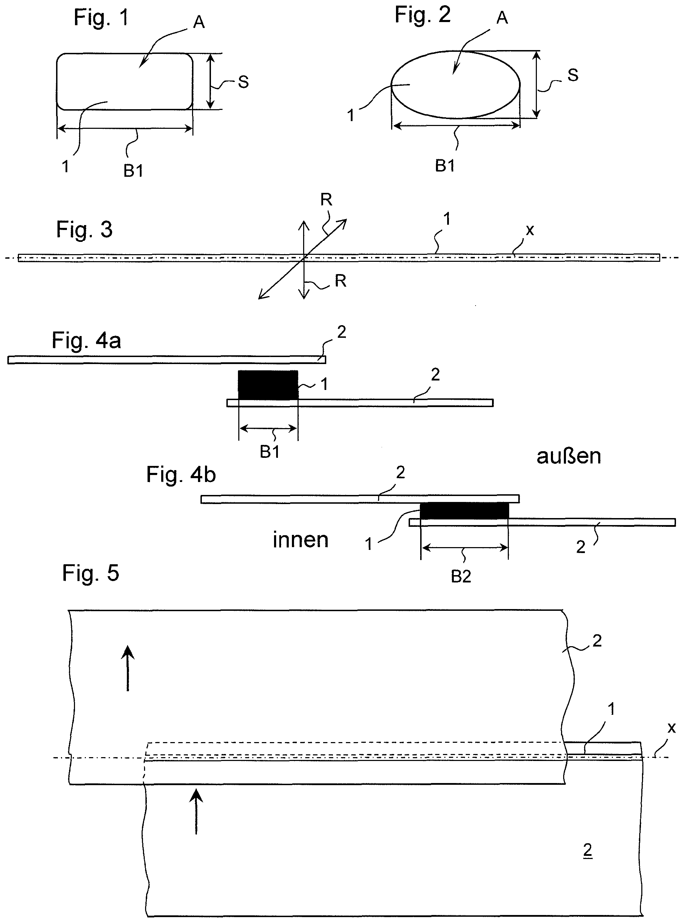

In den Fig. 1 und 2 sind zwei unterschiedliche Querschnittformen von Kleberaupen 1 mit entsprechend unterschiedlichen Querschnittflächen A dargestellt. In Figur 1 eine rechteckförmige und in Figur 2 eine ovale Querschnittsform. Die Querschnittfläche wird in einer Richtung rechtwinklig zur Längsachse X ermittelt. Die Breite B1 bezeichnet diejenige Fläche der Kleberaupe 1, mit der die Kleberaupe 1 mit einem Bauelement 2 verklebt wird. Die Schichtdicke S bezeichnet die zur Breite B1 rechtwinklige Abmessung der Kleberaupe 1.

In Figur 3 ist ein Stück einer Kleberaupe 1 mit ihrer Längsachse X dargestellt. Mit Doppelpfeilen sind verschiedene Richtungen R gezeigt, relativ zu denen die Kleberaupe 1 verschiedene Elastizitätsmodule aufweist.

In den Figuren 4a und 4b ist schematisch dargestellt, wie sich die Kleberaupe 1 vor und nach dem dichten Abkleben von zwei Bauelementen 2 verformt. Durch festes Anpressen der beiden Bauelemente 2 wird die Kleberaupe 1 dünner und breiter. Feuchtigkeit dringt in diesem Beispiel einer Flachdachabdichtung von außen in Richtung des dargestellten Pfeils nach innen.

Letztendlich ist das verbleibende Maß der Breite, die mit B2 beziffert ist, für die Abdichtung relevant, weil hinsichtlich der Abdichtung die Breite B2 wesentlich den sd-Wert bestimmt, der für die Dichtheit der beiden Bauelemente 2 maßgebend ist. Bei konstantem µ-Wert nimmt der sd-Wert proportional zur Breite zu.

In Fig. 5 ist eine Draufsicht von zwei im Dachbereich mit einer Kleberaupe 1 dicht miteinander verbundenen Bauelementen 2 dargestellt.

## Patentansprüche

1. Dichtungsband für den Baubereich zum dichten Anschließen und Verbinden von Bauelementen, wobei
a) das Dichtungsband aus einer Kleberaupe (1) einer elastischen und selbstklebenden Masse gebildet ist,
b) die Kleberaupe (1) selbsttragend ist,
c) die Kleberaupe (1) bei Raum- oder Umgebungstemperaturen zwischen 0°C und 40°C auf unpolaren, faserigen und/oder feuchten Substratoberflächen ihre klebende und selbstschweißende Eigenschaft entfaltet,
**dadurch gekennzeichnet, dass**
d) die Kleberaupe (1) aus einem durchgehenden Strang der Masse mit einer Breite (B1) von mindestens 5 mm oder einer Querschnittfläche (A) von mindestens 6 mm² hergestellt ist, wobei
e) die Masse ein Klebstoff aus der Familie der Heißklebstoffe ist und als Mischung zumindest Polyolefine, die in Gegenwart von Metallocen als Katalysator hergestellt wurden, und Kohlenwasserstoffharze sowie Polyisobutylen enthält;
f) die Masse für die Kleberaupe (1) derart eingestellt ist, dass sie abhängig von der Luftfeuchtigkeit mindestens einen Wasserdampfdiffusionswiderstandszahl-Wert (µ-Wert) zwischen 250.000 und 1.500.000 aufweist.

2. Dichtungsband nach Anspruch 1, **dadurch gekennzeichnet, dass** die Kleberaupe (1) aus einem einteiligen, materialidentischen und homogenen Strang der Masse hergestellt ist.

3. Dichtungsband nach einem der vorstehenden Ansprüche, **dadurch gekennzeichnet, dass** die Kleberaupe (1) eine runde und/oder rechteckförmige Querschnittfläche (A) mit einem Verhältnis von Breite (B1) zu Schichtdicke (S) von höchstens 10 aufweist, bevorzugt zwischen 2 und 5 aufweist.

4. Dichtungsband nach einem der vorhergehenden Ansprüche, **dadurch gekennzeichnet, dass** die Kleberaupe (1) in einer Richtung (R) rechtwinklig zu ihrer Längsachse (X) eine plastische Streckgrenze von mindestens 400 % aufweist.

5. Dichtungsband nach einem der vorhergehenden Ansprüche, **dadurch gekennzeichnet, dass** die Kleberaupe (1) in einer Richtung (R) rechtwinklig zu ihrer Längsachse (X) eine elastische Streckgrenze von mindestens 25 % aufweist.

6. Dichtungsband nach einem der vorhergehenden Ansprüche, **dadurch gekennzeichnet, dass** die Kleberaupe (1) mit einer Länge von mindestens 10 Meter auf eine Trennlage appliziert ist und gemeinsam mit der Trennlage zu einer Rolle oder zu einer Kreuzspule aufgewickelt ist.

7. Dichtungsband nach einem der vorhergehenden Ansprüche, **dadurch gekennzeichnet, dass** die Kleberaupe (1) trägerfrei ist.

8. System bestehend aus einem Dichtungsband nach einem der vorhergehenden Ansprüche und bahnen- oder plattenförmigem Baumaterial (2) das im Baubereich im Dachbereich anzuschließen und/oder abzudichten ist.

## Claims

1. A sealing tape for the construction industry for sealing and connecting and joining structural elements tightly, wherein
a) the sealing tape is formed from an adhesive bead (1) of an elastic and self-adhesive compound,
b) the adhesive bead (1) is self-supporting,
c) the adhesive bead (1) develops its adhesive and self-welding property on non-polar, fibrous and/or moist substrate surfaces at room or ambient temperatures between 0°C and 40°C,
**characterized in that**
d) the adhesive bead (1) is produced from a continuous strand of the compound with a width (B1) of at least 5 mm or a cross-sectional area (A) of at least 6 mm², wherein
e) the compound is an adhesive material from the family of hot-melt adhesives and contains a mixture of at least polyolefins, which have been produced in the presence of metallocene as a catalyst, hydrocarbon resins and polyisobutylene;
f) the compound for the adhesive bead (1) is adjusted such that, depending on the air humidity, it has at least a water vapor diffusion resistance factor (µ-value) between 250,000 and 1,500,000.

2. The sealing tape according to Claim 1, **characterized in that** the adhesive bead (1) is produced from a single-piece, material-identical and homogenous strand of the compound.

3. The sealing tape according to any one of the preceding claims, **characterized in that** the adhesive bead (1) has a round and/or rectangular cross-sectional area (A) with a ratio of the width (B1) to the layer thickness (S) of a maximum of 10, preferably between 2 and 5.

4. The sealing tape according to any one of the preceding claims, **characterized in that** the adhesive bead (1) has a plastic yield strength of at least 400% in a direction (R) at right angles to its longitudinal axis (X).

5. The sealing tape according to any one of the preceding claims, **characterized in that** the adhesive bead (1) has an elastic yield strength of at least 25% in a direction (R) at right angles to its longitudinal axis (X).

6. The sealing tape according to any one of the preceding claims, **characterized in that** the adhesive bead (1) having a length of at least 10 meters is applied to a separation layer and is wound up together with the separation layer to form a roll or a cross-wound bobbin.

7. The sealing tape according to any one of the preceding claims, **characterized in that** the adhesive bead (1) is carrier-free.

8. A system consisting of a sealing tape according to any one of the preceding claims and sheet-type or plate-type structural material (2) which is to be connected and/or sealed in the roof area in the construction industry.

## Revendications

1. Bande d'étanchéité destinée au domaine de la construction pour le raccordement dense et l'assemblage d'éléments de construction, pour laquelle
a) la bande d'étanchéité est formée à partir d'une chenille d'adhésif (1) d'une masse élastique et auto-adhésive ;
b) la chenille d'adhésif (1) est autoportante ;
c) la chenille d'adhésif (1), pour une température ambiante comprise entre 0 et 40 C, présente ses propriétés adhésives et autosoudantes sur des surfaces de substrat non polaires, fibreuses et/ou humides ;
**caractérisée en ce que**
d) la chenille d'adhésif (1) est réalisée à partir d'un brin continu de la masse d'une largeur (B1) d'au moins 5 mm ou d'une surface en coupe transversale (A) d'au moins 6 mm², pour laquelle
e) la masse est un adhésif appartenant à la famille des adhésifs thermofusibles et constitue un mélange contenant au moins des résines d'hydrocarbures, des polyisobutylènes, ainsi que des polyoléfines, qui ont été produites en présence de catalyseurs métallocènes.
f) la masse pour la chenille d'adhésif (1) est établie de façon à au moins présenter un coefficient de résistance à la diffusion de vapeur d'eau (coefficient µ) compris entre 250 000 et 1 500 000 en fonction de l'humidité de l'air.

2. Bande d'étanchéité selon la revendication 1, **caractérisée en ce que** la chenille d'adhésif (1) est réalisée à partir d'un brin monobloc, de même matériau et homogène de la masse.

3. Bande d'étanchéité selon l'une des revendications précédentes, **caractérisée en ce que** la chenille d'adhésif (1) présente une surface en coupe transversale (A) ronde et/ou rectangulaire avec un rapport entre la largeur (B1) et l'épaisseur de couche (S) de 10 maximum, de préférence compris entre 2 et 5.

4. Bande d'étanchéité selon l'une des revendications précédentes, **caractérisée en ce que** la chenille d'adhésif (1) présente une limite de plasticité d'au moins 400 % dans une direction (R) perpendiculaire à son axe longitudinal (X).

5. Bande d'étanchéité selon l'une des revendications précédentes, **caractérisée en ce que** la chenille d'adhésif (1) présente une limite d'élasticité d'au moins 25 % dans une direction (R) perpendiculaire à son axe longitudinal (X).

6. Bande d'étanchéité selon l'une des revendications précédentes, **caractérisée en ce que** la chenille d'adhésif (1) est appliquée sur une couche de séparation sur une longueur d'au moins 10 mètres et est enroulée sur un rouleau ou une bobine croisée.

7. Bande d'étanchéité selon l'une des revendications précédentes, **caractérisée en ce que** la chenille d'adhésif (1) est sans support.

8. Système composé d'une bande d'étanchéité selon l'une des revendications précédentes et d'un matériau de construction (2), en forme de bande ou de plaque, qui est à raccorder et/ou à étanchéifier dans la zone du toit dans le domaine de la construction.
